# EUROPÄISCHE PATENTSCHRIFT

(11) **EP 1 722 129 B1**
(45) Veröffentlichungstag und Bekanntmachung des Hinweises auf die Patenterteilung: **19.08.2009**
(21) Anmeldenummer: 06009758.1
(22) Anmeldetag: 11.05.2006
(51) Int. Cl.: F16H 39/02, B60K 17/16

(54) **Antriebseinrichtung**
Drive arrangement
Ensemble d'entraînement

(30) Priorität: 11.05.2005 DE 102005021837
(43) Veröffentlichungstag der Anmeldung: 15.11.2006
(73) Patentinhaber: Liebherr-Machines Bulle SA, 1630 Bulle (CH)
(72) Erfinder: Eckhardt, Erich, 1642 Sorens (CH); Progin, Pascal, 1630 Bulle (CH); Schwede, Franz-Josef, 3280 Murten (CH)
(74) Vertreter: Thoma, Michael

(56) Entgegenhaltungen:
- DE-A1- 4 228 294
- DE-A1- 19 625 445
- DE-A1- 19 740 554
- US-A- 5 314 387

## Beschreibung

Die vorliegende Erfindung betrifft eine Antriebseinrichtung für ein Fahrzeug, die eine Hydraulikmotoreinheit und eine Bremse aufweist, deren Bremsrotor mit einer Motorwelle der Hydraulikmotoreinheit verbunden ist, wobei die Motorwelle mit ihren beiden Enden stirnseitig aus einem Motorgehäuse heraustritt und eines der heraustretenden Enden einen Antriebsabschnitt bildet, der drehfest mit einem von der Motorwelle anzutreibenden Antriebselement verbindbar ist.

Solche Antriebseinrichtungen mit einer Hydraulikmotoreinheit finden regelmäßig bei Baumaschinen Verwendung und können als Einzelradantrieb eingebaut sein oder mit ihrer Motorwelle das Antriebsritzel eines Getriebes, einer Antriebsachse oder auch die Welle eines Hubantriebes antreiben. Regelmäßig wird hierbei die Bremse direkt mit der Motorwelle der Hydraulikmotoreinheit gekoppelt, um die Bremskraft über die Motorwelle über das anzutreibende Rad, die Achse oder das sonstige Antriebselement einzubringen. Ein hierbei zu lösendes Problem ist hierbei die Anordnung der Bremse außerhalb des geschmierten Bereiches der Antriebseinrichtung. Während die Motorwelle und alle weiteren wesentlichen Komponenten der Hydraulikmotoreinheit im Inneren eines gekapselten bzw. vom Motorgehäuse abgedichteten Bereichs laufen, der mit Schmiermitteln gefüllt ist, müssen der Bremsrotor und der damit zusammenwirkende Bremsstator der Bremse in einem trockenen Bereich laufen, um ihre Wirkung entfalten zu können. Dies führt dann, wenn die Bremse unmittelbar mit der Motorwelle der Hydraulikmotoreinheit gekoppelt ist und die Bremse mehr oder minder in die Hydraulikmotoreinheit integriert ist, dazu, dass zusätzliche Abdichtungen vorgesehen werden müssen und das Gehäuse um die Bremse herum gebaut werden muß.

Eine Antriebseinrichtung mit einer Hydraulikmotoreinheit der vorgenannten Art zeigt beispielsweise die DE 42 28 294 B4, die vorschlägt, zwei Hydraulikmotoren hintereinander zu schalten und mit ihren Motorwellen drehfest zu koppeln, so dass auf beiden Seiten des Motorgehäuses ein Motorwellen-Antriebsabschnitt herausragt, welcher mit der Antriebsachse eines allradbetriebenen Fahrzeugs gekoppelt wird. Die Hydraulikmotoreinheit wird derart in den Antriebsstrang des Fahrzeugs eingebaut, dass der eine Motorwellen-Antriebsabschnitt die Vorderachsräder und der andere Motorwellen-Antriebsabschnitt die Hinterachsräder antreibt. Die vorliegende Problemstellung hinsichtlich der Anordnung der Bremse löst die genannte Schrift jedoch nicht. Aus der US 5,314,387 ist ein Hydromotor bekannt, bei dem eine Bremsvorrichtung auf der Motorwelle in einem separaten, abgedichteten Motorgehäuseabschnitt sitzt.

Der vorliegenden Erfindung liegt die Aufgabe zugrunde, eine verbesserte Antriebsvorrichtung der genannten Art zu schaffen, die Nachteile des Standes der Technik vermeidet und letzteren in vorteilhafter Weise weiterbildet. Insbesondere soll eine verbesserte Anordnung der Bremse erreicht werden, die kleinbauend ist, eine leichte Wartung der Bremse ermöglicht und keine doppelte Abdichtung der Hydraulikmotoreinheit erfordert.

Diese Aufgabe wird erfindungsgemäß durch eine Antriebseinrichtung gemäß Anspruch 1 gelöst. Bevorzugte Ausgestaltungen der Erfindung sind Gegenstand der abhängigen Ansprüche.

Erfindungsgemäß ist die Bremse also auf dem dem Antriebsabschnitt der Motorwelle gegenüberliegenden Ende des Motorgehäuses vorgesehen, wobei vorteilhafter Weise die Bremse vollständig außerhalb des abgedichteten Motorgehäuses angeordnet ist. Die Motorwelle tritt hierzu mit ihrem anderen, dem Antriebsabschnitt gegenüberliegenden Ende ebenfalls aus dem Motorgehäuse heraus und bildet dort einen Bremsenverbindungsabschnitt, auf dem der Bremsrotor drehfest montiert ist. Die Bremse kann dabei als Feststellbremse, aber auch als Betriebsbremse genutzt werden. Insbesondere dann, wenn die Motorwelle über ein Getriebe mit dem anzutreibenden Antriebselement verbunden ist, wird auch die Bremskraft über das Getriebe übersetzt. Im Gegensatz zu bisherigen Lösungen, bei denen die Bremse auf der Motorwelle sitzend zwischen dem die Hydraulikkomponenten des Hydraulikmotors aufnehmenden Motorgehäuse und dem Getriebegehäuse angeordnet war, erlaubt es die vorliegende Anordnung der Bremse auf dem dem Antriebsabschnitt der Motorwelle gegenüberliegenden Ende der Motorwelle, auf eine doppelte Abdichtung des Motorgehäuses auf beiden Seiten der Bremse zu verzichten. Zudem zeichnet sich die Bremse durch ihre gute Zugänglichkeit und damit Wartungsfreundlichkeit und einfache Montierbarkeit aus. Besonders vorteilhaft ist es dabei, dass an sich handelsübliche Bremsen anbaubar sind. Dies können grundsätzlich Scheiben-, Trommel- oder Lamellenbremsen sein.

In Weiterbildung der Erfindung besitzt die Hydraulikmotoreinheit zwei hintereinander geschaltete Hydraulikmotoren, deren Motorwellen drehfest miteinander verbunden sind. Die Motorwelle des einen Hydraulikmotors tritt dabei auf der einen Seite der Hydraulikmotoreinheit aus dem Motorgehäuse heraus und bildet den vorgenannten Antriebsabschnitt, mit dem ein Antriebsritzel eines Getriebes, eine Achse oder unmittelbar ein Einzelrad angetrieben werden kann. Die Motorwelle des anderen Hydraulikmotors ragt auf der anderen Seite der Hydraulikmotoreinheit aus dem Motorgehäuse heraus und bildet den vorgenannten Bremsenverbindungsabschnitt, auf dem der Bremsrotor sitzt. Durch die Zusammenschaltung zweier Hydraulikmotoren zu einem Tandem-Hydraulikmotor lassen sich beträchtliche Vorteile für den Motorbetrieb erreichen. Im Gegensatz zu der DE 42 28 294 B4 werden jedoch die beiden auf gegenüberliegenden Seiten heraustretenden Motorwellenenden nicht beide zu Antriebszwecken genutzt, sondern unterschiedlichen Funktionen zugeführt.

Das eine Motorwellenende dient dem Antrieb der anzutreibenden Antriebskomponente, während das gegenüberliegende Wellenende dem Bremsen dient.

Vorteilhafterweise sind bei einem solchen Tandem-Hydraulikmotor mit zwei hintereinander geschalteten Hydraulikmotoren die Motorwellen koaxial zueinander angeordnet. Sie können gegebenenfalls integral einstückig miteinander ausgebildet sein, vorteilhafter Weise jedoch sind sie getrennt ausgebildet und liegen sich stirnseitig gegenüber. Sie können insbesondere durch eine Wellen-Naben-Verbindung drehfest miteinander verbunden sein.

Besondere Vorteile ergeben sich durch die Anordnung der Bremse auf der dem Antriebsabschnitt der Motorwelle gegenüberliegenden Ende des Motorgehäuses hinsichtlich der Verbindbarkeit des Antriebsabschnittes der Motorwelle mit dem anzutreibenden Antriebselement. Erfindungsgemäß sitzt auf dem Antriebsabschnitt der Motorwelle ein Antriebsritzel, das in einem mit dem Motorgehäuse starr verbindbaren Getriebegehäuse gelagert ist, wobei das Antriebsritzel auf seiner, dem Motorgehäuse abgewandten Seite mit einem Lager an dem Getriebegehäuse abstützt ist, während das Antriebsritzel auf der dem Motorgehäuse zugewandten Seite nur auf der Motorwelle abgestützt ist. Das zweite Lager für das Antriebsritzel auf dessen dem Motor zugesandten Seite wird eingespart, wodurch sich zum einen natürlich niedrigere Baukosten durch das Einsparen des Lagers selbst ergeben. Zum andern können jedoch auch die Verluste in Folge der Lagerreibung reduziert werden.

Vorteilhafterweise erfüllt hierbei eine Lagerung der Motorwelle in dem Motorgehäuse eine Doppelfunktion. Insbesondere dann, wenn dieses Lager der Motorwelle möglichst nahe an den Antriebsabschnitt und das darauf sitzende Antriebsritzel herangerückt wird, vorzugsweise unmittelbar an einen Dichtabschnitt angrenzt, mit dem die Motorwelle gegenüber dem Motorgehäuse abgedichtet wird, angrenzt, kann die Motorwellenlagerung zum einen natürlich die Motorwelle lagern, zum anderen jedoch gleichzeitig eine Abstützung des Antriebsritzels bewirken. Das Antriebsritzel kann vorteilhafter Weise auf seiner dem Motorgehäuse zugewandten Seite mit einem Zentrieransatz auf einer Schulter der Motorwelle sitzen, so dass sich das Antriebsritzel über die Motorwellenschulter und die Lagerung der Motorwelle an dem Motorgehäuse abstützt. Das Lager der Motorwelle liegt vorteilhafter Weise möglichst nahe in der Nachbarschaft der besagten Motorwellenschulter, vorzugsweise dergestalt, dass zwischen der Motorwellenschulter und dem Zentrieransatz lediglich noch eine Motorwellendichtung, die die Motorwelle gegenüber dem Motorgehäuse abdichtet, liegt.

Durch das Einsparen eines zweiten separaten Lagers für das Antriebsritzel und die Doppelfunktion des Lagers der Motorwelle neben der bereits erwähnten Einsparung eines Lagers und der Verringerung der Verluste kann eine statisch bestimmte Anordnung erreicht werden, die keine statischen Überbestimmungen mehr aufweist, wie dies bei einer doppelten Lagerung für das Antriebsritzel bei starrer Verbindung des Getriebegehäuses und des Motorgehäuses der Fall wäre.

Die Bremse kann grundsätzlich verschieden beschaffen, beispielsweise als Trommelbremse oder als Lamellenbremse ausgebildet sein. Nach einer vorteilhaften Ausführung der Erfindung ist die Bremse als Scheibenbremse ausgebildet, bei der eine Bremsscheibe drehfest auf der Motorwelle sitzt. Der Bremsanker, im Falle der Ausbildung als Scheibenbremse der die Bremsscheibe umgreifende Bremssattel kann dabei vorteilhafter Weise unmittelbar an dem Motorgehäuse der Hydraulikmotoreinheit drehfest gelagert sein. Hierdurch wird eine direkte Drehmomentabstützung erreicht.

Die Erfindung wird nachfolgend anhand eines bevorzugten Ausführungsbeispiels und zugehöriger Zeichnungen näher erläutert. In den Zeichnungen zeigen:
- Figur 1:: eine schematische Teilschnittansicht einer Hydraulikmotoreinheit einer Antriebseinrichtung nach einer vorteilhaften Ausführung der Erfindung, die zwei hintereinander geschaltete Hydraulikmotoren mit zwei auf gegenüberliegenden Seiten heraustretenden Wellenenden aufweist, wobei auf einem der heraustretenden Wellenenden eine Bremse montiert ist und
- Figur 2:: eine Teilschnittansicht des auf dem der Bremse gegenüberliegenden Wellenende sitzenden Antriebsritzels eines Getriebes, das mit der Hydraulikmotoreinheit aus Figur 1 verbunden und von diesem angetrieben wird.

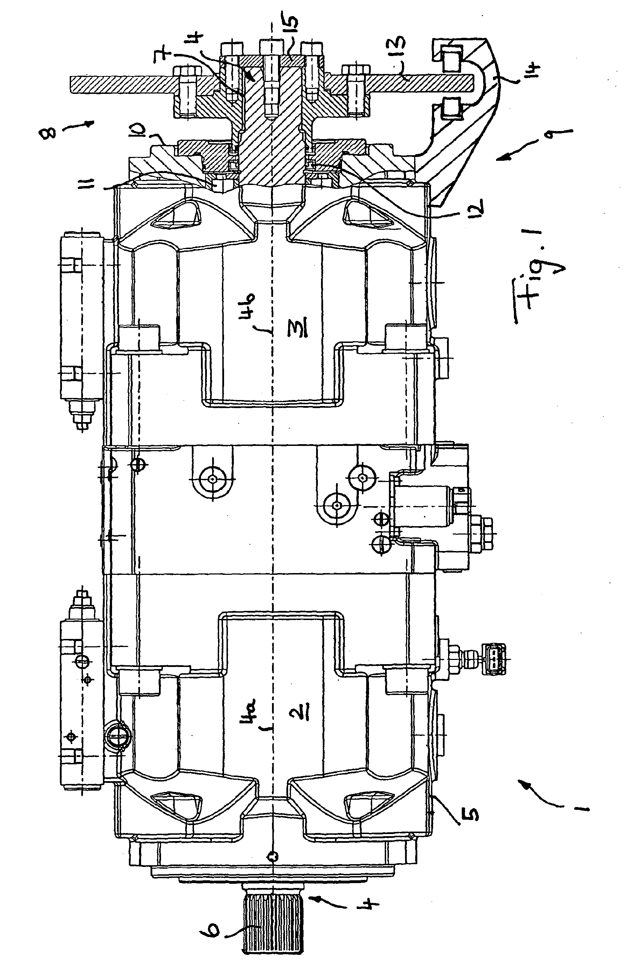

Die in Figur 1 gezeigte Hydraulikmotoreinheit 1 besteht aus zwei hintereinander geschalteten Hydraulikmotoren 2 und 3, die jeweils in an sich bekannter Weise als Schrägscheibenmotoren mit veränderlichem Schluckvolumen ausgebildet sein können. Die beiden Hydraulikmotoren 2 und 3 sind mit ihren Motorwellen 4a und 4b koaxial zueinander angeordnet, wobei die Motorwellen 4a und 4b starr miteinander gekoppelt sein können, so dass sie gemeinsam eine Motorwelle 4 der Hydraulikmotoreinheit 1 bilden können. Die Kopplung der Motorwellen 4a und 4b kann beispielsweise über eine Wellen-Naben-Verbindung erfolgen, wie dies in der DE 42 28 294 B4 gezeigt ist.

Wie Figur 1 zeigt, ist das Motorgehäuse 5 der Hydraulikmotoreinheit 1 in zwei Motorgehäuseabschnitte 5a und 5b unterteilt, die den jeweiligen Hydraulikmotoren 2 und 3 zugeordnet sind und miteinander starr verbindbar sind.

Die Motorwelle 4 tritt auf dem in Figur 1 linken Ende der Hydraulikmotoreinheit 1 aus dem Motorgehäuse 5 heraus und bildet dort einen Antriebsabschnitt 6, der drehfest mit einem anzutreibenden Antriebselement wie beispielsweise dem Antriebsritzel eines Getriebes verbunden werden kann, wie noch näher erläutert wird.

Auf dem dem Antriebsabschnitt 6 der Motorwelle 4 gegenüberliegenden Ende tritt die Motorwelle 4 ebenfalls aus dem Motorgehäuse 5 heraus. Sie bildet dort einen Bremsenverbindungsabschnitt 7, über den eine Bremse 8 der Antriebseinrichtung 9 mit der Hydraulikmotoreinheit 1, genauer gesagt deren Motorwelle 4 koppelbar ist. Wie Figur 1 zeigt, ist die Motorwelle 4 an der der Bremse 8 benachbarten Stirnseite des Motorgehäuses 5 über an Lager 11 in Form eines Wälzlagers abgestützt und unmittelbar im axialen Anschluss an das Lager 11 durch eine Dichtung 12 gegenüber dem Motorgehäuse 5 abgedichtet. Das über die Dichtung 12 vorstehende Wellenende bildet den vorgenannten Bremsenverbindungsabschnitt 7 der Motorwelle 4, auf dem die Bremse 8, genauer gesagt deren Bremsrotor 13 drehfest sitzt.

In der gezeichneten Ausführungsform ist als Bremse 8 eine Scheibenbremse vorgesehen, bei der der Bremsrotor 13 von einer Bremsscheibe gebildet wird, die sich radial von der Motorwelle 4 weg erstreckt. Der Bremsstator 14 der Bremse 8 ist bei der Ausbildung als Scheibenbremse als Bremssattel ausgebildet und vorteilhafter Weise unmittelbar auf dem Motorgehäuse 5 drehfest befestigt. Wie Figur 1 andeutet, umgreift der Bremssattel die Bremsscheibe beidseitig, so dass gegenüberliegende Bremskolben mit der Bremsscheibe in Eingriff gebracht werden können.

Der Bremsrotor 13 kann mit dem Bremsenverbindungsabschnitt vorteilhafter Weise durch eine formschlüssige Verbindung, beispielsweise eine Wellen-Naben-Verbindung in Form einer Keilwellenverbindung, drehfest verbunden sein. Wie Figur 1 zeigt, ist der Bremsrotor 13 axial auf der Motorwelle 4 durch eine Befestigungsplatte 15 gesichert, die stirnseitig auf dem Wellenende der Motorwelle 4 sitzt.

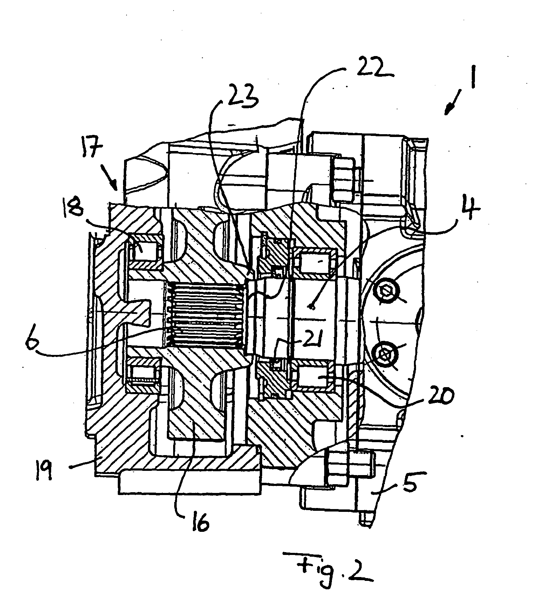

Auf dem der Bremse 8 gegenüberliegenden Ende der Motorwelle 4 sitzt in der gezeichneten Ausführung, wie Figur 2 zeigt, ein Antriebsritzel 16 eines Getriebes 17, dessen Ausgangswelle bzw. Abtriebsritzel nicht dargestellt ist und in an sich bekannter Weise das jeweilige Antriebselement, beispielsweise ein Einzelrad eines Fahrzeugs antreibt.

Wie Figur 2 zeigt, sitzt das Antriebsritzel 16 drehfest auf dem Antriebsabschnitt 6 der Motorwelle 4, wobei auch hier eine formschlüssige drehmomentübertragende Verbindung in Form einer Wellen-Naben-Verbindung, insbesondere einer Keilwellenverbindung vorgesehen sein kann.

Das Antriebsritzel 16 ist dabei auf seiner dem Motorgehäuse 5 abgewandten Seite durch ein Lager 18, das in der gezeichneten Ausführung ein Wälzlager ist, an einem Getriebegehäuse 19 abgestützt, welches starr mit dem Motorgehäuse 5 verbunden ist. Wie Figur 2 zeigt, sitzt das Getriebegehäuse 19 auf einem Zentrierabsatz des Motorgehäuses 5, so dass das Getriebegehäuse 19 relativ zu dem Motorgehäuse 5 zentriert wird.

Die aus dem Motorgehäuse 5 austretende Motorwelle 4 ist an dem Motorgehäuse 5 über ein Lager 20 vorzugsweise ebenfalls in Form eines Wälzlagers abgestützt, und zwar unmittelbar im Bereich des Durchtritts durch das Motorgehäuse 5. Wie Figur 2 zeigt, liegt das Lager 20 unmittelbar an der Dichtung 21, mit Hilfe derer die Motorwelle 4 auf der Antriebsseite gegenüber dem Motorgehäuse 5 abgedichtet wird.

Außerhalb der Dichtung 21, unmittelbar im Anschluss an dieses, besitzt die Motorwelle 4 eine Zentrierschulter 22, auf der das Antriebsritzel 16 mit einem Zentrieransatz 23 sitzt, so dass das Antriebsritzel 16 auf der Motorwelle 4 axial und radial abgestützt wird.

Wie Figur 2 zeigt, ist das Antriebsritzel 16 auf der dem Motorgehäuse 5 zugewandten Seite nicht gegenüber dem Getriebegehäuse 19 abgestützt. Dieses bei herkömmlichen Lösungen an sich übliche Lager wird eingespart. Das die Motorwelle 4 am Motorgehäuse 5 abstützende Lager 20 übernimmt die Funktion des eingesparten Lagers und stützt gleichzeitig unter Zwischenschaltung der Zentrierschulter 22 und des Zentrieransatzes 23 das Antriebsritzel 16 ab.

## Patentansprüche

1. Antriebseinrichtung für ein Fahrzeug und/oder eine Baumaschine, mit einer Hydraulikmotoreinheit (1), die in einem Motorgehäuse (5) aufgenommen ist, und einer Bremse (8), deren Bremsrotor (13) mit einer Motorwelle (4) der Hydraulikmotoreinheit (1) verbunden ist, wobei die Motorwelle (4) mit ihren beiden Enden stirnseitig auf gegenüberliegenden Seiten aus dem Motorgehäuse (5) heraustritt und eines der heraustretenden Enden einen Antriebsabschnitt (6) bildet, der drehfest mit einem von der Motorwelle anzutreibenden Antriebselement verbindbar ist, **dadurch gekennzeichnet, dass** das andere heraustretende, dem Antriebsabschnitt gegenüberliegende Ende der Motorwelle (4) einen Bremsenverbindungsabschnitt (7) bildet, an dem der Bremsrotor (13) drehfest befestigt ist, wobei auf dem aus dem Motorgehäuse heraustretenden Antriebsabschnitt (6) der Motorwelle (4) ein Antriebsritzel (16) sitzt, das in einem mit dem Motorgehäuse (5) starr verbindbaren Getriebegehäuse (19) gelagert ist, wobei das Antriebsritzel (16) nur auf seiner dem Motorgehäuse (5) abgewandten Seite mit einem Lager (18) an dem Getriebegehäuse (19) abgestützt ist, während das Antriebsritzel (16) auf seiner dem Motorgehäuse (5) zugewandten Seite nur auf der Motorwelle (4) abgestützt ist.

2. Antriebseinrichtung nach dem vorhergehenden Anspruch, wobei die Hydraulikmotoreinheit (1) zwei hintereinander geschaltete Hydraulikmotoren (2, 3) aufweist, deren Motorwellen (4a, 4b) drehfest miteinander verbindbar sind und gemeinsam die Motorwelle (4) der Hydraulikmotoreinheit (1) bilden, wobei die Motorwelle (4a) des einen Hydraulikmotors (2) den Antriebsabschnitt (6) und die Motorwelle (4b) des anderen Hydraulikmotors (3) den Bremsenverbindungsabschnitt (7) bildet.

3. Antriebseinrichtung nach einem der vorhergehenden Ansprüche, wobei das Antriebsritzel (16) auf seiner dem Motorgehäuse (5) zugewandten Seite mit einem Zentrieransatz (23) auf einer Wellenschulter (22) der Motorwelle (4) sitzt und die Motorwelle an einem der Wellenschulter (22) benachbarten Lagerabschnitt an dem Motorgehäuse (5) über ein Lager (20) abgestützt ist.

4. Antriebseinrichtung nach einem der vorhergehenden Ansprüche, wobei der mit dem Bremsrotor (13) zusammenwirkende Bremsanker (14) der Bremse (8) an dem Motorgehäuse (5) drehfest gelagert ist.

5. Antriebseinrichtung nach einem der vorhergehenden Ansprüche, wobei die Bremse (8) als Scheibenbremse ausgebildet ist, vorzugsweise eine auf der Motorwelle (4) sitzende Bremsscheibe und einen am Motorgehäuse (5) gelagerten Bremssattel aufweist.

6. Antriebseinrichtung nach einem der vorhergehenden Ansprüche, wobei die Bremse (8) vollständig außerhalb des Motorgehäuses (5) angeordnet ist.

7. Antriebseinrichtung nach einem der vorhergehenden Ansprüche, wobei dass aus dem Motorgehäuse (5) heraustretenden, den Bremsenverbindungsabschnitt (7) bildende Wellenende der Motorwelle (4) ausschließlich mit der Bremse (8) verbunden ist.

## Claims

1. Drive arrangement for a vehicle and/or a construction machine, with a hydraulic motor unit (1) which is accommodated in a motor housing (5), and with a brake (8), the brake motor (13) of which is connected to a motor shaft (4) of the hydraulic motor unit (1), wherein on the end side the motor shaft (4) emerges at both ends thereof from the motor housing (5) on opposite sides and one of the emerging ends forms a drive section (6) which can be connected in a rotationally fixed manner to a drive element to be driven by the motor shaft, **characterized in that** the other emerging end of the motor shaft (4), said end lying opposite the drive section, forms a brake connection section (7) to which the brake rotor (13) is fastened in a rotationally fixed manner, with a drive pinion (16) sitting on the drive section (6) of the motor shaft (4), which drive section emerges from the motor housing, said drive pinion being mounted in a gear mechanism housing (19) which can be connected rigidly to the motor housing (5), the drive pinion (16) being supported only on its side facing away from the motor housing (5) by means of a bearing (18) on the gear mechanism housing (19) while the drive pinion (16) is supported on its side facing the motor housing (5) only on the motor shaft (4).

2. Drive arrangement according to the preceding claim, wherein the hydraulic motor unit (1) has two consecutively connected hydraulic motors (2, 3), the motor shafts (4a, 4b) of which can be connected to each other in a rotationally fixed manner and together form the motor shaft (4) of the hydraulic motor unit (1), the motor shaft (4a) of the one hydraulic motor (2) forming the drive section (6) and the motor shaft (4b) of the other hydraulic motor (3) forming the brake connection section (7).

3. Drive arrangement according to one of the preceding claims, wherein the drive pinion (16) sits on its side facing the motor housing (5) by means of a centring lug (23) on a shaft shoulder (22) of the motor shaft (4), and the motor shaft is supported on a bearing section, which is adjacent to the shaft shoulder (22), on the motor housing (5) via a bearing (20).

4. Drive arrangement according to one of the preceding claims, wherein the brake anchor (14) of the brake (8), which brake anchor interacts with the brake rotor (13), is mounted in a rotationally fixed manner on the motor housing (5).

5. Drive arrangement according to one of the preceding claims, wherein the brake (8) is designed as a disc brake, and preferably has a brake disc sitting on the motor shaft (4) and a brake calliper mounted on the motor housing (5).

6. Drive arrangement according to one of the preceding claims, wherein the brake (8) is arranged entirely outside the motor housing (5).

7. Drive arrangement according to one of the preceding claims, wherein that shaft end of the motor shaft (4) which emerges from the motor housing (5) and forms the brake connection section (7) is connected exclusively to the brake (8).

## Revendications

1. Installation d'entraînement pour un véhicule et/ou une machine de construction, avec une unité de moteurs hydrauliques (1) qui est reçue dans un carter de moteur (5), et un frein (8) dont le rotor de frein (13) est relié à un arbre moteur (4) de l'unité de moteurs hydrauliques (1), où l'arbre moteur (4) fait saillie avec ses deux extrémités au côté frontal sur des côtés opposés du carter du moteur (5), et une des extrémités saillantes forme une section d'entraînement (6) qui peut être reliée d'une manière immobile en rotation à un élément d'entraînement à entraîner par l'arbre de moteur, **caractérisée en ce que** l'autre extrémité saillante, opposée à la section d'entraînement, de l'arbre moteur (4) forme une section de liaison de frein (7) à laquelle est fixé d'une manière immobile en rotation le rotor de frein (13), où repose sur la section menante (6) de l'arbre moteur (4) dépassant du carter du moteur un pignon d'entraînement (16) qui est logé dans un carter d'engrenage (19) pouvant être relié rigidement au carter du moteur (5), où le pignon d'entraînement (16) s'appuie seulement sur son côté éloigné du carter du moteur (5) avec un palier (18) sur le carter d'engrenage (19), tandis que le pignon d'entraînement (16) s'appuie sur son côté orienté vers le carter du moteur (5) seulement sur l'arbre moteur (4).

2. Installation d'entraînement selon la revendication précédente, dans laquelle l'unité de moteurs hydrauliques (1) présente deux moteurs hydrauliques (2, 3) commutés l'un derrière l'autre, dont les arbres moteurs (4a, 4b) peuvent être reliés d'une manière immobile en rotation l'un à l'autre et forment ensemble l'arbre de moteur (4) de l'unité de moteurs hydrauliques (1), où l'arbre moteur (4a) d'un moteur hydraulique (2) forme la section menante (6), et l'arbre moteur (4b) de l'autre moteur hydraulique (3) la section de liaison de frein (7).

3. Installation d'entraînement selon l'une des revendications précédentes, dans laquelle le pignon d'entraînement (16) repose sur son côté orienté vers le carter du moteur (5) avec un bout rapporté de centrage (23) sur un épaulement (22) de l'arbre moteur (4), et l'arbre moteur s'appuie par un palier (20) sur une section de palier, avoisinant l'épaulement d'arbre (22), au carter (5) du moteur.

4. Installation d'entraînement selon l'une des revendications précédentes, dans laquelle l'induit (14) du frein (8) coopérant avec le rotor de frein (13) est logé d'une manière immobile en rotation au carter du moteur (5).

5. Installation d'entraînement selon l'une des revendications précédentes, dans laquelle le frein (8) est réalisé comme frein à disque, et présente de préférence un disque de freinage reposant sur l'arbre moteur (4) et un étrier de frein logé au carter du moteur (5).

6. Installation d'entraînement selon l'une des revendications précédentes, dans laquelle le frein (8) est disposé complètement à l'extérieur du carter du moteur (5).

7. Installation d'entraînement selon l'une des revendications précédentes, dans laquelle l'extrémité de l'arbre moteur (4) faisant saillie du carter de moteur (5), formant la section de liaison de frein (7), est reliée exclusivement au frein (8).
